# EUROPEAN PATENT SPECIFICATION

(11) **EP 1 956 040 B1**
(45) Date of publication and mention of the grant of the patent: **04.01.2012**
(21) Application number: 06833139.6
(22) Date of filing: 22.11.2006
(51) Int. Cl.: C08J 9/00, C08J 9/26, H01M 2/16, H01M 10/36

(54) **MICROPOROUS POLYOLEFIN MEMBRANE, PROCESS FOR PRODUCING THE SAME, SEPARATOR FOR CELL, AND CELL**
MIKROPORÖSE POLYOLEFINMEMBRAN, HERSTELLUNGSVERFAHREN DAFÜR, SEPARATOR FÜR EINE ZELLE UND ZELLE
MEMBRANE MICROPOREUSE POLYOLEFINIQUE, PROCEDE DE PRODUCTION, SEPARATEUR DE CELLULE, ET CELLULE

(30) Priority: 24.11.2005 JP 2005339451
(43) Date of publication of application: 13.08.2008
(73) Proprietor: Toray Tonen Specialty Separator Godo Kaisha, Tochigi Prefecture, 329-2763 (JP)
(72) Inventor: KIMISHIMA, Kotaro, Yokohama-shi, Kanagawa 235-0022 (JP); KAIMAI, Norimitsu, Yokohama-shi, Kanagawa 230-0074 (JP)
(74) Representative: Strehl Schübel-Hopf & Partner
(86) International application number: PCT/JP2006/323317
(87) International publication number: WO 2007/060991

(56) References cited:
- WO-A1-2004/024809
- JP-A- 2002 128 942
- JP-A- 2002 128 943
- JP-A- 2002 194 132
- JP-A- 2004 161 899
- JP-A- 2005 209 452

## Description

### FIELD OF THE INVENTION

This invention relates to a microporous polyolefin membrane and its production method, a battery separator and a battery, particularly to a microporous polyolefin membrane having high stability of properties before the start of shutdown and a high air permeability change ratio after the start of shutdown, as well as excellent heat shrinkage resistance in a temperature range from a shutdown start temperature to a shutdown temperature, and a low shutdown temperature, its production method, a battery separator, and a battery.

### BACKGROUND OF THE INVENTION

Microporous polyethylene membranes are mainly used for battery separators. Particularly lithium ion battery separators are required to have not only excellent mechanical properties and permeability, but also a property of closing pores by heat generation in batteries to stop battery reactions (shutdown properties), a property of preventing membranes from breaking at temperatures exceeding shutdown temperatures (meltdown properties), etc.

As a method for improving the properties of a microporous polyethylene membrane, the optimization of starting material compositions, production conditions, etc. has been proposed. For instance, Japanese Patent 2132327 proposes a microporous polyolefin membrane having excellent strength and permeability, which is made of a polyolefin composition comprising 1 % or more by weight of ultra-high-molecular-weight polyolefin having a mass-average molecular weight (Mw) of 7 x 10⁵ or more, and having a molecular weight distribution [mass-average molecular weight/number-average molecular weight (Mw/Mn)] of 10 to 300, the microporous polyolefin membrane having porosity of 35 to 95%, an average pore diameter of 0.001 to 0.2 µm, and a rupture strength of 0.2 kg or more per 15-mm width.

JP 2004-196870 A proposes a microporous polyolefin membrane comprising polyethylene, and polypropylene having a mass-average molecular weight of 5 x 10⁵ or more and a heat of fusion of 90 J/g or more (measured by a differential scanning calorimeter). JP 2004-196871 A proposes a microporous polyolefin membrane comprising polyethylene, and polypropylene having a mass-average molecular weight of 5 x 10⁵ or more and a melting point of 163°C or higher (measured by a differential scanning calorimeter at a temperature-elevating speed of 3 to 20°C/minute). The microporous polyolefin membranes of JP 2004-196870 A and JP 2004-196871 A have shutdown temperatures of 120 to 140°C and meltdown temperatures of 165°C or higher, as well as excellent mechanical properties and permeability.

WO 97/23554 discloses a microporous membrane having high short-circuiting resistance (shutdown properties), which is made of high-density polyethylene or a linear ethylene copolymer having an end vinyl group concentration of 2 or more per 10,000 carbon atoms when measured by infrared spectroscopy, and a fuse temperature (shutdown temperature) of 131 to 136°C.

However, when a runaway reaction occurs in batteries, separators shrink in a temperature range from the start to end of shutdown, causing short-circuiting at their end portions, which accelerates the runaway reaction. However, the microporous membranes described in the above references do not have a sufficient property of preventing short-circuiting while keeping their shapes in a temperature range from the start to end of shutdown (heat shrinkage resistance).

### OBJECT OF THE INVENTION

Accordingly, an object of this invention is to provide a microporous polyolefin membrane having high stability of properties before the start of shutdown and a high air permeability change ratio, a measure of the shutdown speed, after the start of shutdown, as well as excellent heat shrinkage resistance in a temperature range from a shutdown start temperature, from which pores start to close, to a shutdown temperature, at which the closure of pores is substantially completed, and a low shutdown temperature, and its production method, and a battery separator and a battery.

### DISCLOSURE OF THE INVENTION

As a result of intense research in view of the above object, the inventors have found that (1) a microporous polyolefin membrane having excellent heat shrinkage resistance in a temperature range from a shutdown start temperature to a shutdown temperature, and a low shutdown temperature can be obtained from a polyolefin resin comprising a polyethylene resin, in which the calorie absorbed up to 125°C is 20% or less of the crystal-melting calorie measured by differential scanning calorimetry at a predetermined temperature-elevating speed, and in which the absorbed calorie reaches 50% of the crystal-melting calorie at a temperature of 135°C or lower; and that (2) a microporous polyolefin membrane having high stability of properties before the start of shutdown and a high air permeability change ratio after the start of shutdown, as well as excellent heat shrinkage resistance in a temperature range from a shutdown start temperature to a shutdown temperature and a low shutdown temperature can be obtained by melt-blending a polyolefin resin comprising the above polyethylene resin and a membrane-forming solvent in a double-screw extruder, such that a ratio Q/Ns of the charging speed Q (kg/h) of the polyolefin resin to a screw rotation speed Ns (rpm) is 0.1 to 0.55 kg/h/rpm, extruding the resultant polyolefin resin solution through a die and cooling it to form a gel-like sheet, and removing the membrane-forming solvent from the gel-like sheet. This invention has been completed based on such findings.

Thus, the microporous polyolefin membrane of this invention comprises a polyethylene resin, and has (a) a shutdown temperature of 135°C or lower, at which the air permeability measured while heating at a temperature-elevating speed of 5°C/minute reaches 1 x 10⁵ sec/100 cm³, (b) an air permeability change ratio of 1 x 10⁴ sec/100 cm³/°C or more, which is a gradient of an air permeability-temperature curve at the air permeability of 1 x 10⁴ sec/100 cm³, and (c) a shrinkage ratio of 20% or less at 130°C in a transverse direction, which is measured by thermomechanical analysis under a load of 2 gf and at a temperature-elevating speed of 5°C/minute.

The polyethylene resin has ΔHM (≤ 125°C) of 20% or less (a ratio of the calorie absorbed up to 125°C to the crystal-melting calorie measured by differential scanning calorimetry at a constant temperature-elevating speed in a range of 3 to 20°C/minute), and a temperature of 135°C or lower, at which the absorbed calorie reaches 50% of the crystal-melting calorie.

The method for producing a microporous polyolefin membrane according to this invention comprises the steps of (1) melt-blending a polyolefin resin comprising a polyethylene resin and a membrane-forming solvent in a double-screw extruder at a ratio Q/Ns of 0.1 to 0.55 kg/h/rpm, wherein Q is a charging speed (kg/h) of the polyolefin resin, and Ns is a screw rotation speed (rpm), to prepare a polyolefin resin solution, the polyethylene resin having ΔHm (≤ 125°C) of 20% or less (a ratio of the calorie absorbed up to 125°C to the crystal-melting calorie measured by differential scanning calorimetry at a constant temperature-elevating speed in a range of 3 to 20°C/minute), and a temperature of 135°C or lower, at which the absorbed calorie reaches 50% of the crystal-melting calorie; (2) extruding the polyolefin resin solution through a die, and cooling it to form a gel-like sheet; (3) stretching the gel-like sheet; and then (4) removing the membrane-forming solvent.

The gel-like sheet is preferably stretched at a speed of 1 to 80%/second per 100% of the length before stretching.

The battery separator of this invention is formed by the above microporous polyolefin membrane.

The battery of this invention comprises a separator formed by the above microporous polyolefin membrane.

### BRIEF DESCRIPTION OF THE DRAWING

Fig. 1 is a graph showing a typical example of melting endotherm curves.

Fig. 2 is a graph showing the same melting endotherm curve as in Fig. 1, in which the calorie absorbed up to 125°C is 20% or less of the crystal-melting calorie.

Fig. 3 is a graph showing a temperature T (50%), at which the absorbed calorie reaches 50% of the crystal-melting calorie in the same melting endotherm curve as in Fig. 1.

Fig. 4 is a graph showing a typical example of curves representing the relation between a temperature T and (air permeability p)⁻¹ for determining a shutdown start temperature.

Fig. 5 is a graph showing a typical example of curves representing the relation between a temperature T and air permeability p for determining a shutdown temperature, an air permeability change ratio and a meltdown temperature.

### DESCRIPTION OF THE PREFERRED EMBODIMENTS

[1] Polyolefin resin

The polyethylene resin forming the microporous polyolefin membrane of this invention comprises a polyethylene resin described below.

(1) Crystal-melting calorie of polyethylene resin

In the polyethylene resin, a ratio of the calorie absorbed up to 125°C to the crystal-melting calorie AHm measured by differential scanning calorimetry (DSC) at a constant temperature-elevating speed in a range of 3 to 20°C/minute [hereinafter referred to as "ΔHₘ (≤ 125°C)"] is 20% or less, and a temperature [hereinafter referred to as "T (50%)"], at which the absorbed calorie reaches 50% of the crystal-melting calorie ΔHₘ, is 135°C or lower.

The T (50%) is a parameter affected by the primary structure of the polyethylene [homopolymer or ethylene-α-olefin copolymer], such as a molecular weight, a molecular weight distribution, a branching ratio, the molecular weight of branched chains, the distribution of branching points, the percentage of copolymers, etc., and the high-order structure of the polyethylene such as the size and distribution of crystals, crystal lattice regularity, etc., which is a measure of a shutdown temperature and an air permeability change ratio after the start of shutdown. When the T (50%) is higher than 135°C, the microporous polyolefin membrane exhibits poor shutdown properties and low overheat shutdown response when used as a lithium battery separator.

The ΔHm (≤ 125°C) is a parameter affected by the molecular weight, branching ratio and molecule entanglement of the polyethylene. The ΔHm (≤ 125°C) of 20% or less and the T (50%) of 135°C or lower provide a microporous membrane with a low shutdown temperature, and excellent heat shrinkage resistance in a temperature range from a shutdown start temperature to a shutdown temperature. The ΔHm (≤ 125°C) is preferably 17% or less.

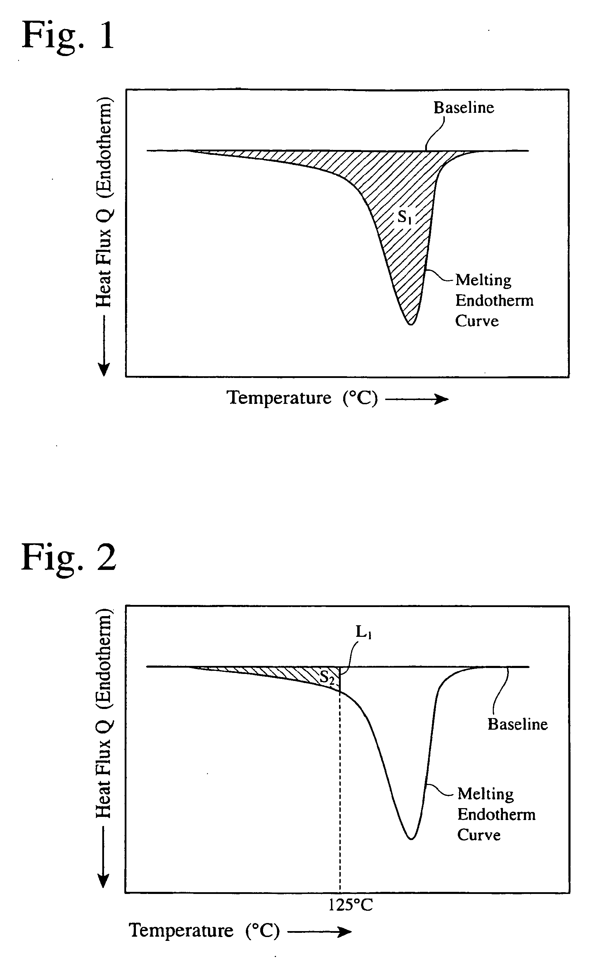

The crystal-melting calorie ΔHm of the polyethylene resin was measured by the following procedure according to JIS K7122. Namely, a sample of the polyethylene resin (0.5-mm-thick molding melt-pressed at 210°C) was placed in a sample holder of a differential scanning calorimeter (Pyris Diamond DSC available from Perkin Elmer, Inc.), heat-treated at 230°C for 1 minute in a nitrogen atmosphere, cooled to 30°C at 10°C/minute, kept at 30°C for 1 minute, and heated to 230°C at a speed of 3 to 20°C/minute. The temperature-elevating speed is preferably 5 to 15°C/minute, more preferably 10°C/minute. As shown in Fig. 1, the calorie was determined from an area S₁ of a region (shown by hatching) enclosed by a DSC curve (melting endotherm curve) obtained during temperature elevation and a baseline. The crystal-melting calorie ΔHm (unit: J/g) was obtained by dividing the calorie (unit: J) by the weight (unit: g) of the sample.

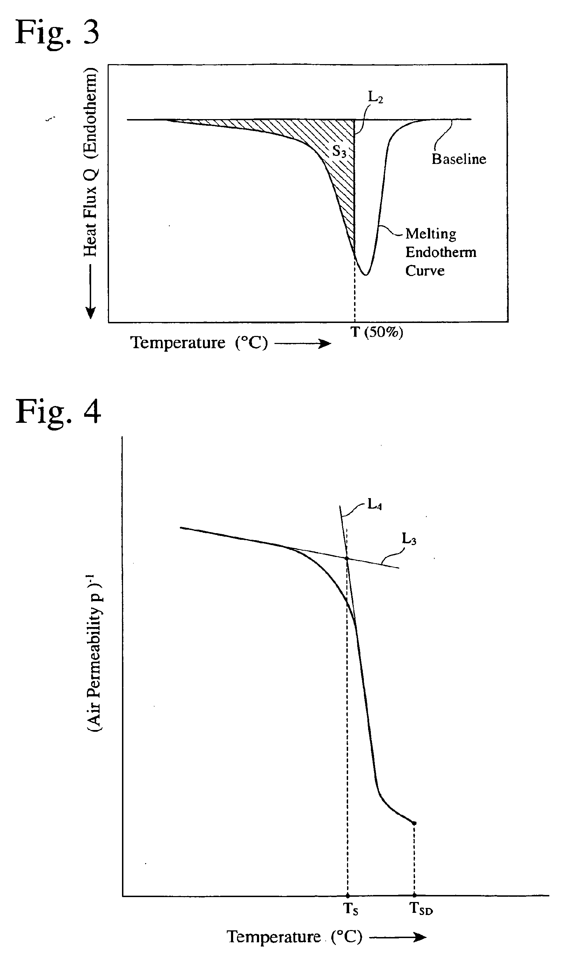

As shown in Fig. 2, ΔHm (≤ 125°C) is a ratio (area %) of an area S₂ of a lower-temperature region (shown by hatching) obtained by dividing the area S₁ by a straight line L₁ perpendicular to the baseline at 125°C to the area S₁. T (50%) is, as shown in Fig. 3, a temperature, at which an area S₃ of a lower-temperature region (shown by hatching) obtained by dividing the area S₁ by a straight line L₂ perpendicular to the baseline reaches 50% of the area S₁.

(2) Components of polyethylene resin

The polyethylene resin may be a single substance or a composition of two or more types of polyethylene, as long as its ΔHm (≤ 125°C) and T (50%) are within the above ranges. The polyethylene resin is preferably (a) ultra-high-molecular-weight polyethylene, (b) polyethylene other than the ultra-high-molecular-weight polyethylene, or (c) a mixture of the ultra-high-molecular-weight polyethylene and the other polyethylene (polyethylene composition). In any case, the mass-average molecular weight (Mw) of the polyethylene resin is preferably 1 x 10⁴ to 1 x 10⁷, more preferably 5 x 10⁴ to 15 x 10⁶, particularly 1 x 10⁵ to 5 x 10⁶, though not particularly critical.

(a) Ultra-high-molecular-weight polyethylene

The ultra-high-molecular-weight polyethylene has Mw of 7 x 10⁵ or more. The ultra-high-molecular-weight polyethylene can be not only an ethylene homopolymer, but also an ethylene-α-olefin copolymer containing a small amount of another α-olefm. The other α-olefins than ethylene are preferably propylene, butene-1, pentene-1, hexene-1, 4-methylpentene-1, octene-1, vinyl acetate, methyl methacrylate, and styrene. The Mw of the ultra-high-molecular-weight polyethylene is preferably 1 x 10⁶ to 15 x 10⁶, more preferably 1 x 10⁶ to 5 x 10⁶.

(b) Polyethylene other than ultra-high-molecular-weight polyethylene

The polyethylene other than the ultra-high-molecular-weight polyethylene has Mw of 1 x 10⁴ or more and less than 7 x 10⁵, being preferably high-density polyethylene, medium-density polyethylene, branched low-density polyethylene and linear low-density polyethylene, more preferably high-density polyethylene. The polyethylene having Mw of 1 x 10⁴ or more and less than 7 x 10⁵ can be not only an ethylene homopolymer, but also a copolymer containing a small amount of another α-olefin such as propylene, butene-1, hexene-1, etc. Such copolymers are preferably produced using single-site catalysts. The polyethylene other than the ultra-high-molecular-weight polyethylene can be not only a single substance, but also a mixture of two or more polyethylenes other than the ultra-high-molecular-weight polyethylene.

(c) Polyethylene composition

The polyolefin composition is a mixture of the ultra-high-molecular-weight polyethylene having Mw of 7 x 10⁵ or more with the other polyethylene having Mw of 1 x 10⁴ or more and less than 7 x 10⁵ (at least one selected from the group consisting of high-density polyethylene, medium-density polyethylene, branched low-density polyethylene, and linear low-density polyethylene). The ultra-high-molecular-weight polyethylene and the other polyethylene can be the same as described above. The molecular weight distribution [mass-average molecular weight/number-average molecular weight (Mw/Mn)] of this polyethylene composition can easily be controlled depending on applications. The preferred polyethylene composition comprises the above ultra-high-molecular-weight polyethylene and high-density polyethylene. The high-density polyethylene used in the polyethylene composition has Mw of preferably 1 x 10⁵ or more and less than 7 x 10⁵, more preferably 1 x 10⁵ to 5 x 10⁵, most preferably 2 x 10⁵ to 4 x 10⁵. The amount of the ultra-high-molecular-weight polyethylene in the polyethylene composition is preferably 1% by mass or more, more preferably 2 to 50% by mass, based on 100% by mass of the entire polyethylene composition.

(d) Molecular weight distribution Mw/Mn

Mw/Mn is a measure of the molecular weight distribution, and the larger this value is, the wider the molecular weight distribution is. The Mw/Mn of the polyethylene resin is preferably 5 to 300, more preferably 10 to 100, though not critical, in any case where the polyethylene resin is either one of the above (a) to (c). When the Mw/Mn is less than 5, there are excessive high-molecular weight components, resulting in difficulty in melt extrusion. When the Mw/Mn is more than 300, there are excessive low-molecular weight components, resulting in a microporous membrane with decreased strength. The Mw/Mn of polyethylene (homopolymer or ethylene-α-olefin copolymer) can properly be controlled by multi-stage polymerization. The multi-stage polymerization method is preferably a two-stage polymerization method comprising forming a high-molecular-weight polymer component in the first stage and forming a low-molecular-weight polymer component in the second stage. In case of the polyethylene composition, the larger the Mw/Mn, the larger difference in Mw between the ultra-high-molecular-weight polyethylene and the other polyethylene, and vice versa. The Mw/Mn of the polyethylene composition can be properly controlled by the molecular weight and percentage of each component.

Such polyethylene resins are commercially available, for instance, as Nipolon Hard 6100A, 7300A and 5110A from Tosoh Corporation, and HI-ZEX 640UF and 780UF from Prime Polymer Co., Ltd.

(3) Other resins which may be added

The polyolefin resin may contain a polyolefin other than polyethylene or a resin other than the polyolefin in a range not deteriorating the effect of this invention. Accordingly, it should be noted that the term "polyolefin resin" includes not only a polyolefin but also a resin other than the polyolefin. The polyolefin other than polyethylene can be at least one selected from the group consisting of polypropylene, polybutene-1, polypentene-1, polyhexene-1, poly-4-methylpentene-1, polyoctene-1, polyvinyl acetate, polymethyl methacrylate, polystyrene and ethylene-α-olefin copolymers each having Mw of 1 x 10⁴ to 4 x 10⁶, and a polyethylene wax having Mw of 1 x 10³ to 1 x 10⁴. Polypropylene, polybutene-1, polypentene-1, polyhexene-1, poly-4-methylpentene-1, polyoctene-1, polyvinyl acetate, polymethyl methacrylate and polystyrene may be homopolymers or copolymers containing other α-olefins.

The resin other than the polyolefin includes a heat-resistant resin having a melting point or glass transition temperature (Tg) of 150°C or higher. The heat-resistant resin is preferably a crystalline resin (including partially crystalline resin) having a melting point of 150°C or higher, or an amorphous resin having Tg of 150°C or higher. The melting point and Tg can be measured according to JIS K7121.

The addition of the heat-resistant resin to the polyethylene resin improves the meltdown temperature of the microporous polyolefin membrane when used as a battery separator, thereby providing batteries with improved high-temperature storage stability. From the aspect of easy blending with the polyethylene resin, the upper limit of the melting point or Tg of the heat-resistant resin is preferably 350°C or lower, though not particularly critical. The melting point or Tg of the heat-resistant resin is more preferably 170 to 260°C.

Specific examples of the heat-resistant resin include polyesters such as polybutylene terephthalate (melting point: about 160 to 230°C) and polyethylene terephthalate (melting point: about 250 to 270°C), fluororesins, polyamides (melting point: 215 to 265°C), polyarylene sulfides, isotactic polystyrene (melting point: 230°C), polyimides (Tg:280°C or higher), polyamideimides (Tg: 280°C), polyethersulfone (Tg: 223°C), polyetheretherketone (melting point: 334°C), polycarbonates (melting point: 220 to 240°C), cellulose acetate (melting point: 220°C), cellulose triacetate (melting point: 300°C), polysulfone (Tg: 190°C), polyetherimides (melting point: 216°C), etc. The heat-resistant resin can be composed of a single resin component or pluralities of resin components.

The heat-resistant resin content is preferably 3 to 30% by mass, more preferably 5 to 25% by mass, based on 100% by mass of the total charging speed of the polyethylene resin and the heat-resistant resin. When this content is more than 30% by mass, the membrane has low pin puncture strength, tensile rupture strength and flatness.

[2] Inorganic fillers

Inorganic fillers may be added to the polyolefin resin in a range not deteriorating the effect of this invention. The inorganic fillers include silica, alumina, silica-alumina, zeolite, mica, clay, kaolin, talc, calcium carbonate, calcium oxide, calcium sulfate, barium carbonate, barium sulfate, magnesium carbonate, magnesium sulfate, magnesium oxide, diatomaceous earth, glass powder, aluminum hydroxide, titanium dioxide, zinc oxide, satin white, acid clay, etc. The inorganic fillers can be used alone or in combination. Among them, silica and/or calcium carbonate are preferably used. The amount of inorganic fillers added is preferably 0.1 to 5 parts by mass, more preferably 0.5 to 3 parts by mass, based on 100 parts by mass of the total charging speed of the polyolefin resin and the fillers.

[3] Production method of microporous polyolefin membrane

The production method of the microporous polyolefin membrane of this invention comprises the steps of (1) melt-blending the above polyolefin resin and membrane-forming solvent to prepare a polyolefin resin solution, (2) extruding the polyolefin resin solution through a die, (3) cooling the extrudate to form a gel-like sheet, (4) removing the membrane-forming solvent, and (5) drying the resultant membrane. That is, the microporous polyolefin membrane is produced by a so-called wet method. Between the steps (3) and (4), any one of a stretching step (6), a hot roll treatment step (7), a hot solvent treatment step (8) and a heat-setting step (9) can be conducted, if necessary. After the step (5), a microporous-membrane-stretching step (10), a heat treatment step (11), a cross-linking step (12) with ionizing radiations, a hydrophilizing step (13), a surface-coating step (14), etc. can be conducted. It should be noted that a dry method (forming pores by stretching) may be disadvantageous than the wet method in the shutdown temperature.

(1) Preparation of polyolefin resin solution

The polyolefin resin and a proper membrane-forming solvent are melt-blended to prepare a polyolefin resin solution. The polyolefin resin solution can contain various additives such as the above inorganic fillers, antioxidants, ultraviolet absorbents, antiblocking agents, pigments, dyes, etc., if necessary, in ranges not deteriorating the effects of this invention. Fine silicate powder, for instance, can be added as a pore-forming agent.

The membrane-forming solvent can be liquid or solid. The liquid solvents can be aliphatic or cyclic hydrocarbons such as nonane, decane, decalin, p-xylene, undecane, dodecane, liquid paraffin, etc.; and mineral oil distillates having boiling points corresponding to those of the above hydrocarbons. To obtain a gel-like sheet having a stable liquid solvent content, non-volatile liquid solvents such as liquid paraffin are preferable. The solid solvent preferably has a melting point of 80°C or lower. Such solid solvents are paraffin wax, ceryl alcohol, stearyl alcohol, dicyclohexyl phthalate, etc. The liquid solvent and the solid solvent can be used in combination.

The viscosity of the liquid solvent is preferably 30 to 500 cSt, more preferably 30 to 200 cSt, at 25°C. When the viscosity at 25°C is less than 30 cSt, the solution is easily foamed, resulting in difficulty in blending. The viscosity of more than 500 cSt makes the removal of the liquid solvent difficult.

Although a melt blending method is not particularly restricted, uniform blending in the extruder is preferable. This method is suitable for preparing a high-concentration polyolefin resin solution. The melt-blending temperature is generally in a range from the melting point Tm of the polyolefin resin + 10°C to Tm + 110°C, though it can be properly selected depending on the components of the polyolefin resin. The melting point of the polyolefin resin Tm is the melting point of (a) the ultra-high-molecular-weight polyethylene, (b) the polyethylene other than the ultra-high-molecular-weight polyethylene, or (c) the polyethylene composition, when the polyolefin resin is any one of them. When the polyolefin resin is a composition comprising the polyolefin other than polyethylene or the heat-resistant resin, it is the melting point of the ultra-high-molecular-weight polyethylene, the other polyethylene or the polyethylene composition, which is contained in the above composition. The ultra-high-molecular-weight polyethylene, the other polyethylene and the polyethylene composition have melting points of about 130 to 140°C. Accordingly, the melt-blending temperature is preferably 140 to 250°C, more preferably 170 to 240°C. The membrane-forming solvent may be added before the start of blending or introduced into the double-screw extruder at an intermediate point during blending, through the latter is preferable. In the melt blending, the antioxidant is preferably added to prevent the oxidation of the polyolefin resin.

The extruder is preferably a double-screw extruder. The double-screw extruder may be an intermeshing, co-rotating, double-screw extruder, an intermeshing, counter-rotating, double-screw extruder, a non-intermeshing, co-rotating, double-screw extruder, or a non-intermeshing, counter-rotating, double-screw extruder. The intermeshing, co-rotating, double-screw extruder is preferable from the aspect of self cleaning, and a larger number of rotation with a smaller load than the counter-rotating, double-screw extruder.

The ratio (L/D) of a screw length L to a screw diameter D in the double-screw extruder is preferably 20 to 100, more preferably 35 to 70. When L/D is less than 20, the melt-blending is insufficient. When L/D is more than 100, the residing time of the polyolefin resin solution is too long. The shape of the screw is not particularly restricted, but may be a known one. The cylinder of the double-screw extruder preferably has an inner diameter of 40 to 100 mm.

The ratio Q/Ns of the charging speed Q (kg/h) of the polyolefin resin introduced into the double-screw extruder to the screw rotation speed Ns (rpm) is preferably 0.1 to 0.55 kg/h/rpm. When the Q/Ns is less than 0.1 kg/h/rpm, the polyolefin resin is too much sheared, resulting in a lowered meltdown temperature and poor rupture resistance during temperature elevation after the shutdown. When the Q/Ns is more than 0.55 kg/h/rpm, uniform blending cannot be achieved. The ratio Q/Ns is more preferably 0.2 to 0.5 kg/h/rpm. The screw rotation speed Ns is more preferably 250 rpm or more. The upper limit of the screw rotation speed Ns is preferably 500 rpm, though not particularly critical.

The concentration of the polyolefin resin is 10 to 50% by mass, preferably 20 to 45% by mass, based on 100% by mass of the total charging speed of the polyolefin resin and the membrane-forming solvent. Less than 10% by mass of the polyolefin resin undesirably lowers productivity. In addition, large swelling and neck-in occur at the die exit in the extrusion of the polyolefin resin solution, resulting in decrease in the formability and self-supportability of the extrudate. More than 50% by mass of the polyolefin resin lowers the formability of the extrudate.

(2) Extrusion

The melt-blended polyolefin resin solution is extruded through a die directly or indirectly from the extruder. Alternatively, it may be cooled to pellets, introduced into the extruder again, and then extruded through the die. Although a sheet-forming die having a rectangular orifice is usually used, a double-cylindrical, hollow die, an inflation die lip, etc. can also be used. The sheet-forming die usually has a die gap of 0.1 to 5 mm, and is heated at 140 to 250°C during extrusion. The extrusion speed of the heated solution is preferably 0.2 to 15 m/minute.

(3) Formation of gel-like sheet

An extrudate exiting from the die is cooled to provide a gel-like sheet. The cooling is preferably conducted to at least a gelation temperature at a speed of 50°C/minute or more. Such cooling fixes microphase separation between the polyolefin resin and the membrane-forming solvent, thereby providing a fixed gel structure comprising a polyolefin resin phase and a membrane-forming solvent phase. The cooling is preferably conducted to 25°C or lower. In general, a low cooling speed provides the gel-like sheet with a coarse high-order structure having large pseudo-cell units, while a high cooling speed provides dense cell units. The cooling speed of less than 50°C/minute increases crystallization, making it difficult to form a stretchable gel-like sheet. The cooling method can be a method of bringing the extrudate into contact with a cooling medium such as cooling air, cooling water, etc., a method of bring the extrudate into contact with a cooling roll, etc., and the cooling method using a cooling roll is preferable.

The temperature of the cooling roll is preferably (the crystallization temperature Tc of the polyolefin resin - 120°C) to Tc - 5°C, more preferably (Tc - 115°C) to (Tc - 15°C). When the temperature of the cooling roll is higher than (Tc - 5°C), sufficiently rapid cooling cannot be conducted. The crystallization temperature Tc of the polyolefin resin is the crystallization temperature of (a) the ultra-high-molecular-weight polyethylene, (b) the polyethylene other than the ultra-high-molecular-weight polyethylene, or (c) the polyethylene composition, when the polyolefin resin is any one of them. When the polyolefin resin is a composition containing the polyolefin other than the polyethylene or the heat-resistant resin, it is the crystallization temperature of the ultra-high-molecular-weight polyethylene, the other polyethylene or the polyethylene composition, which is contained in the above composition. The crystallization temperature is measured according to JIS K7121. The ultra-high-molecular-weight polyethylene, the other polyethylene and the polyethylene composition generally have crystallization temperatures of 110 to 115°C. Accordingly, the temperature of the cooling roll is in a range from -10°C to 105°C, preferably in a range from -5°C to 95°C. The contact time of the cooling roll with the sheet is preferably 1 to 30 seconds, more preferably 2 to 15 seconds.

(4) Removal of membrane-forming solvent

The liquid solvent is removed (washed away) using a washing solvent. Because the polyolefin resin phase is separated from the membrane-forming solvent phase in the gel-like sheet, the removal of the liquid solvent provides a microporous membrane. The removal (washing away) of the liquid solvent can be conducted by using a known washing solvent. The washing solvents can be volatile solvents, for instance, saturated hydrocarbons such as pentane, hexane, heptane, etc.; chlorinated hydrocarbons such as methylene chloride, carbon tetrachloride, etc.; ethers such as diethyl ether, dioxane, etc.; ketones such as methyl ethyl ketone, etc.; linear fluorocarbons such as trifluoroethane, C₆F₁₄, C₇F₁₆, etc.; cyclic hydrofluorocarbons such as C₅H₃F₇, etc.; hydrofluoroethers such as C₄F₉OCH₃, C₄F₉OC₂H₅, etc.; and perfluoroethers such as C₄F₉OCF₃, C₄F₉OC₂F₅, etc. These washing solvents have a low surface tension, for instance, 24 mN/m or less at 25°C. The use of a washing solvent having a low surface tension suppresses a pore-forming network structure from shrinking due to a surface tension of gas-liquid interfaces during drying after washing, thereby providing a microporous membrane having high porosity and permeability.

The washing of the membrane can be conducted by a washing-solvent-immersing method, a washing-solvent-showering method, or a combination thereof The amount of the washing solvent used is preferably 300 to 30,000 parts by mass, per 100 parts by mass of the membrane before washing. Washing with the washing solvent is preferably conducted until the amount of the remaining liquid solvent becomes less than 1% by mass of that added.

(5) Drying of membrane

The microporous polyolefin membrane obtained by removing the membrane-forming solvent is then dried by a heat-drying method, a wind-drying method, etc. The drying temperature is preferably equal to or lower than the crystal dispersion temperature Tcd of the polyolefin resin, particularly 5°C or more lower than the Tcd.

The crystal dispersion temperature Tcd of the polyolefin resin is the crystal dispersion temperature of (a) the ultra-high-molecular-weight polyethylene, (b) the polyethylene other than the ultra-high-molecular-weight polyethylene, or (c) the polyethylene composition, when the polyolefin resin is any one of them. When the polyolefin resin is a composition containing the polyolefin other than polyethylene or the heat-resistant resin, it is the crystal dispersion temperature of the ultra-high-molecular-weight polyethylene, the other polyethylene or the polyethylene composition, which is contained in the above composition. The crystal dispersion temperature is determined by the measurement of the temperature characteristics of dynamic viscoelasticity according to ASTM D 4065. The ultra-high-molecular-weight polyethylene, the polyethylene other than the ultra-high-molecular-weight polyethylene and the polyethylene composition have crystal dispersion temperatures of about 90 to 100°C.

Drying is conducted until the percentage of the remaining washing solvent becomes preferably 5% or less by mass, more preferably 3% or less by mass, based on 100% by mass of the microporous membrane (dry weight). Insufficient drying undesirably reduces the porosity of the microporous membrane when heat-treated subsequently, thereby resulting in poor permeability.

(6) Stretching

The gel-like sheet before washing is preferably stretched at least monoaxially. After heating, the gel-like sheet is preferably stretched to a predetermined magnification by a tenter method, a roll method, an inflation method, a rolling method, or their combination. Because the gel-like sheet contains a membrane-forming solvent, it can be uniformly stretched. The stretching is particularly preferable when used for battery separators, because it improves the mechanical strength and expands pores. Although the stretching can be monoaxial or biaxial, biaxial stretching is preferable. The biaxial stretching can be simultaneous biaxial stretching, sequential stretching, or multi-stage stretching (for instance, a combination of simultaneous biaxial stretching and sequential stretching), though the simultaneous biaxial stretching is particularly preferable.

The stretching magnification is preferably 2-fold or more, more preferably 3- to 30-fold in case of monoaxial stretching. In case of biaxial stretching, it is at least 3-fold in both directions, preferably with an area magnification of 9-fold or more. The area magnification of less than 9-fold results in insufficient stretching, failing to providing a high-modulus, high-strength microporous membrane. When the area magnification is more than 400-fold, restrictions occur on stretching apparatuses, stretching operations, etc. The upper limit of the area magnification is preferably 50-fold.

The stretching temperature is preferably equal to or lower than the melting point Tm of the polyolefin resin + 10°C, more preferably in a range of the crystal dispersion temperature Tcd or higher and lower than the melting point Tm. When this stretching temperature exceeds Tm + 10°C, the polyethylene resin is molten, so that stretching fails to orient molecular chains. When it is lower than Tcd, the polyethylene resin is insufficiently softened, making it likely that the membrane is broken by stretching, thus failing to achieve high-magnification stretching. As described above, the polyethylene resin has a crystal dispersion temperature of about 90 to 100°C. Accordingly, the stretching temperature is usually in a range from 90°C to 140°C, preferably in a range from 100°C to 130°C.

The stretching speed is preferably 1 to 80%/second. In case of monoaxial stretching, it is 1 to 80%/second in a longitudinal direction (MD) or a transverse direction (TD). In case of biaxial stretching, it is 1 to 80%/second in both MD and TD. The stretching speed (%/second) is a percentage of the elongation of the gel-like sheet per 1 second relative to the length (100%) before stretching. When the stretching speed is less than 1 %/second, stable stretching cannot be conducted. When the stretching speed is more than 80%/second, the heat shrinkage resistance decreases. The stretching speed is more preferably 2 to 70%/second. In case of biaxial stretching, the stretching speed may be different in MD and TD as long as it is within 1 to 80%/second in each of MD and TD, though the same stretching speed is preferable.

The above stretching causes cleavage between polyethylene crystal lamellas, making the polyethylene phase (the ultra-high-molecular-weight polyethylene, the other polyethylene or the polyethylene composition) finer with larger numbers of fibrils. The fibrils form a three-dimensional network structure (three-dimensionally and irregularly connected network structure).

Depending on the desired properties, stretching can be conducted with a temperature distribution in a thickness direction, to provide a microporous membrane with higher mechanical strength. This method is described specifically in Japanese Patent 3347854.

(7) Hot roll treatment

At least one surface of the gel-like sheet can be brought into contact with a heat roll to provide the microporous membrane with improved compression resistance. This method is specifically described, for instance, in Patent application WO-A- 2007 32450.

(8) Hot solvent treatment

The gel-like sheet can be treated with a hot solvent to provide the microporous membrane with improved mechanical strength and permeability. This method is specifically described in WO 2000/20493.

(9) Heat setting

The stretched gel-like sheet can be heat-set. This method is specifically described, for instance, in JP 2002-256099 A.

(10) Stretching of microporous membrane

The dried microporous polyolefin membrane can be stretched at least monoaxially in a range not deteriorating the effect of this invention. This stretching can be conducted by a tenter method, etc. while heating the membrane, in the same manner as described above.

The temperature of stretching the microporous membrane is preferably equal to or lower than the melting point Tm of the polyolefin resin, more preferably in a range of the Tcd to the Tm. Specifically, it is in a range from 90°C to 135°C, preferably in a range from 95°C to 130°C. In case of biaxial stretching, it is preferably 1.1- to 2.5-fold, more preferably 1.1- to 2.0-fold, at least monoaxially. When this magnification is more than 2.5-fold, the shutdown temperature may be deteriorated.

(11) Heat treatment

The dried membrane is preferably heat-set and/or annealed by known methods. They may be properly selected depending on properties required on the microporous polyolefin membrane. The heat treatment stabilizes crystals and makes lamellas uniform. It is particularly preferable to anneal the microporous membrane after stretching.

(12) Cross-linking of membrane

The dried microporous polyolefin membrane can be cross-linked by ionizing radiation of α-rays, β-rays, γ-rays, electron beams, etc. The electron beam irradiation is preferably conducted at 0.1 to 100 Mrad and accelerating voltage of 100 to 300 kV. The cross-linking treatment elevates the meltdown temperature of the microporous membrane.

(13) Hydrophilizing

The dried microporous polyolefin membrane can be hydrophilized by a monomer-grafting treatment, a surfactant treatment, a corona-discharging treatment, a plasma treatment, etc., which are known.

(14) Surface coating

The dried microporous polyolefin membrane can be coated with a porous fluororesin such as polyvinylidene fluoride and polytetrafluoroethylene, porous polyimide, porous polyphenylene sulfide, etc., to improve meltdown properties when used as a battery separator. A coating layer comprising polypropylene may be formed on at least one surface of the dried microporous polyolefin membrane. The containing polypropylene is described, for instance, in WO2005-054350.

[4] Properties of microporous polyolefin membrane

The microporous polyolefin membrane has the following properties.

(1) Shutdown temperature of 135°C or lower

When the shutdown temperature is higher than 135°C, a lithium battery separator formed by the microporous polyolefin membrane has low shutdown response when overheated.

(2) Air permeability change ratio (a measure of shutdown speed) of 1 x 10⁴ sec/100 cm³/°C or more

The air permeability change ratio after the start of shutdown is 1 x 10⁴ sec/100 cm³/°C or more. When the air permeability change ratio is less than 1 x 10⁴ sec/100 cm³/°C, a lithium battery separator formed by the microporous polyolefin membrane has low shutdown response when overheated. The air permeability change ratio is preferably 12,000 sec/100 cm³/°C or more.

(3) Shrinkage ratio of 20% or less at 130°C

When the shrinkage ratio at 130°C in a transverse direction, which is measured at a temperature-elevating speed of 5°C/minute by thermomechanical analysis under a load of 2 gf, exceeds 20%, the microporous polyolefin membrane used as a lithium battery separator shrinks in end portions during heat generation, making it likely to cause the short-circuiting of electrodes before the shutdown of the separator. This heat shrinkage ratio is preferably 17% or less.

The microporous polyolefin membrane according to a preferred embodiment of this invention also has the following properties.

(4) Air permeability of 20 to 800 sec/100 cm³ (converted to the value at 20-µm thickness)

When the air permeability is 20 to 800 sec/100 cm³ (converted to the value at 20-µm thickness), a separator formed by microporous polyolefin membrane provides a battery with large capacity and good cycle characteristics. When the air permeability is less than 20 sec/100 cm³, shutdown does not occur sufficiently when the temperature elevates in the battery.

(5) Porosity of 25 to 80%

With the porosity of less than 25%, the microporous polyolefin membrane does not have good air permeability. When the porosity exceeds 80%, the microporous polyolefin membrane used as a battery separator does not have enough strength, resulting in a high likelihood of short-circuiting between electrodes.

(6) Pin puncture strength of 4,000 mN/20 µm or more

With the pin puncture strength of less than 4,000 mN/20 µm, a battery comprising the microporous polyolefin membrane as a separator likely suffers short-circuiting between electrodes. The pin puncture strength is preferably 4,500 mN/20 µm or more.

(7) Tensile rupture strength of 80,000 kPa or more

With the tensile rupture strength of 80,000 kPa or more in both MD and TD, the microporous membrane is unlikely ruptured when used as a battery separator. The tensile rupture strength is preferably 100,000 kPa or more.

(8) Tensile rupture elongation of 100% or more

With the tensile rupture elongation of 100% or more in both MD and TD, the microporous membrane is unlikely ruptured when used as a battery separator.

(9) Shutdown start temperature of 130°C or lower

When the shutdown start temperature is higher than 130°C, a lithium battery separator formed by the microporous polyolefin membrane has low shutdown response when overheated.

(10) Meltdown temperature of 150°C or higher

When the meltdown temperature is lower than 150°C, the microporous membrane has poor rupture resistance during temperature elevation after the shutdown.

Thus, the microporous polyolefin membrane according to a preferred embodiment of this invention has an excellent balance of shutdown properties, heat shrinkage resistance in a range from the shutdown start temperature to the shutdown temperature, and meltdown properties, as well as excellent permeability and mechanical properties.

[5] Battery separator

The thickness of the battery separator formed by the microporous polyolefin membrane of this invention is preferably 5 to 50 µm, more preferably 7 to 35 µm, though properly selectable depending on the types of batteries.

[6] Battery

The microporous polyolefin membrane of this invention can be used preferably as a separator for secondary batteries such as nickel-hydrogen batteries, nickel-cadmium batteries, nickel-zinc batteries, silver-zinc batteries, lithium secondary batteries, lithium polymer secondary batteries, etc., particularly as a separator for lithium secondary batteries. Taking the lithium secondary battery for example, description will be made below.

The lithium secondary battery comprises a cathode and an anode laminated via a separator, the separator containing an electrolytic solution (electrolyte). The electrode can be of any known structure, though not particularly critical. The electrode structure can be, for instance, a coin type in which disc-shaped cathode and anode are opposing, a laminate type in which planar cathode and anode are alternately laminated, a toroidal type in which ribbon-shaped cathode and anode are wound, etc.

The cathode usually comprises (a) a current collector, and (b) a cathodic active material layer capable of absorbing and discharging lithium ions, which is formed on the current collector. The cathodic active materials can be inorganic compounds such as transition metal oxides, composite oxides of lithium and transition metals (lithium composite oxides), transition metal sulfides, etc. The transition metals can be V, Mn, Fe, Co, Ni, etc. Preferred examples of the lithium composite oxides are lithium nickelate, lithium cobaltate, lithium manganate, laminar lithium composite oxides having an α-NaFeO₂ structure, etc. The anode comprises (a) a current collector, and (b) an anodic active material layer formed on the current collector. The anodic active materials can be carbonaceous materials such as natural graphite, artificial graphite, cokes, carbon black, etc.

The electrolytic solutions can be obtained by dissolving lithium salts in organic solvents. The lithium salts can be LiClO₄ LiPF₆, LiAsF₆, LiSbF₆, LiBF₄, LiCF₃SO₃, LiN(CF₃SO₂)₂, LiC(CF₃SO₂)₃, Li₂B₁₀Cl₁₀, LiN(C₂F₅SO₂)₂, LiPF₄(CF₃)₂, LiPF₃(C₂F₅)₃, lower aliphatic carboxylates of lithium, LiAlCl₄, etc. The lithium salts can be used alone or in combination. The organic solvents can be organic solvents having high boiling points and high dielectric constants, such as ethylene carbonate, propylene carbonate, ethylmethyl carbonate, γ-butyrolactone, etc.; organic solvents having low boiling points and low viscosity, such as tetrahydrofuran, 2-methyltetrahydrofuran, dimethoxyethane, dioxolane, dimethyl carbonate, diethyl carbonate, etc. These organic solvents can be used alone or in combination. Because organic solvents having high dielectric constants have high viscosity, while those having low viscosity have low dielectric constants, their mixtures are preferably used.

When the battery is assembled, the separator can be impregnated with the electrolytic solution, so that the separator (microporous polyolefin membrane) is provided with ion permeability. The impregnation treatment is usually conducted by immersing the microporous polyolefin membrane in the electrolytic solution at room temperature. When a cylindrical battery is assembled, for instance, a cathode sheet, a separator formed by the microporous polyolefin membrane, and an anode sheet are laminated in this order, and the resultant laminate is wound to a toroidal-type electrode assembly. The resulting electrode assembly can be charged into a battery can and impregnated with the above electrolytic solution. A battery lid acting as a cathode terminal equipped with a safety valve can be caulked to the battery can via a gasket to produce a battery.

This invention will be described in more detail with reference to Examples below without intention of restricting the scope of this invention.

Example 1

100 parts by mass of a polyethylene (PE) composition comprising 30% by mass of ultra-high-molecular-weight polyethylene (UHMWPE) having a mass-average molecular weight (Mw) of 2.5 x 10⁶, and 70% by mass of high-density polyethylene (HDPE) having Mw of 3.0 x 10⁵ was dry-blended with 0.375 parts by mass of tetrakis[methylene-3-(3,5-ditertiary-butyl-4-hydroxyphenyl)-propionate] methane. Measurement revealed that the PE composition comprising UHMWPE and HDPE had ΔHm (≤ 125°C) of 14%, T (50%) of 132.5°C, a melting point of 135°C, and a crystal dispersion temperature of 100°C.

The Mws of UHMWPE and HDPE were measured by a gel permeation chromatography (GPC) method under the flowing conditions.
Measurement apparatus: GPC-150C available from Waters Corporation,
Column: Shodex UT806M available from Showa Denko K.K.,
Column temperature: 135°C,
Solvent (mobile phase): o-dichlorobenzene,
Solvent flow rate: 1.0 ml/minute,
Sample concentration: 0.1% by mass (dissolved at 135°C for 1 hour),
Injected amount: 500 µl,
Detector: Differential Refractometer available from Waters Corp., and
Calibration curve: Produced from a calibration curve of a single-dispersion, standard polystyrene sample using a predetermined conversion constant.

25 parts by mass of the resultant mixture was charged into a strong-blending, double-screw extruder (inner diameter = 58 mm, L/D = 42) at a charging speed Q of the polyethylene composition of 120 kg/h, and 75 parts by mass of liquid paraffin was supplied to the double-screw extruder via its side feeder. While keeping a screw rotation speed Ns at 400 rpm, melt-blending was conducted at Q/Ns of 0.3 kg/h/rpm and a temperature of 210°C, to prepare a polyethylene solution in the extruder.

The polyethylene solution was supplied from the double-screw extruder to a T-die, and extruded in a 1.2-mm-thick sheet shape. The extrudate was cooled by a cooling roll controlled at 50°C to form a gel-like sheet. The gel-like sheet was simultaneously biaxially stretched to 5-fold at a speed of 20%/second in both MD and TD by a batch-type stretching machine at 114°C. Fixed to an aluminum frame plate of 30 cm x 30 cm, the stretched gel-like sheet was immersed in a washing bath of methylene chloride controlled at 25°C, and washed while swaying at 100 rpm for 3 minutes to remove the liquid paraffin. The washed membrane was air-dried at room temperature. Fixed to a tenter, the dried membrane was heat-set at 126°C for 10 minutes to produce a microporous polyethylene membrane.

Example 2

A microporous polyethylene membrane was produced in the same manner as in Example 1 except for using a polyethylene composition comprising 20% by mass of UHMWPE and 80% by mass of HDPE, and having ΔHm (≤ 125°C) of 16% and T (50%) of 132.9°C.

Example 3

A microporous polyethylene membrane was produced in the same manner as in Example 1 except for using a polyethylene composition comprising 30% by mass of HMWPE having Mw of 2.0 x 10⁶ and 70% by mass of HDPE having Mw of 2.8 x 10⁶, and having ΔHm (≤ 125°C) of 11 % and T (50%) of 134.7°C.

Example 4

After removing liquid paraffin in the same manner as in Example 1, the membrane was dried. It was formed into a microporous polyethylene membrane in the same manner as in Example 1 except for stretching the membrane again to 1.1-fold in TD at a temperature of 126°C, annealing it at 126°C until it shrank to the size before re-stretching, and heat-setting it at the same temperature for 10 minutes.

Comparative Example 1

A microporous polyethylene membrane was produced in the same manner as in Example 1 except for using a polyethylene composition comprising 30% by mass of UHMWPE having Mw of 2.2 x 10⁶ and 70% by mass of HDPE having Mw of 3.0 x 10⁵, and having ΔHm (≤ 125°C) of 9% and T (50%) of 135.9°C.

Comparative Example 2

A microporous polyethylene membrane was produced in the same manner as in Example 1, except that a polyethylene composition comprising 30% by mass of UHMWPE having Mw of 2.2 x 10⁶ 40% by mass of HDPE having Mw of 3.0 x 10⁵, and 30% by mass of low-molecular-weight polyethylene having Mw of 2.0 x 10³, and having ΔHm (≤ 125°C) of 26% and T (50%) of 133.6°C was used, and that the heat-setting temperature was 118°C.

Comparative Example 3

A microporous polyethylene membrane was produced in the same manner as in Example 1, except that a polyethylene composition comprising 20% by mass of UHMWPE having Mw of 2.5 x 10⁶ and 80% by mass of HDPE having Mw of 3.0 x 10⁵, and having ΔHm (≤ 125°C) of 28% and T (50%) of 133.1 °C was used, that the stretching temperature was 108°C, and that the heat-setting temperature was 118°C.

Comparative Example 4

A microporous polyethylene membrane was produced in the same manner as in Example 1 except that a polyethylene composition comprising 20% by mass of UHMWPE having Mw of 2.5 x 10⁶ and 80% by mass of HDPE having Mw of 3.0 x 10⁵, and having ΔHm ≤ 125°C) of 24% and T (50%) of 133.5°C was used; that the stretching speed was 100%, and that the heat-setting temperature was 120°C.

Comparative Example 5

A polyethylene solution was prepared in the same manner as in Example 1, except that a polyethylene composition comprising 20% by mass of UHMWPE having Mw of 2.5 x 10⁶ and 80% by mass of HDPE having Mw of 3.0 x 10⁵, and having ΔHm (≤ 125°C) of 21 % and T (50%) of 132.2°C was used, and that the ratio of the speed Q of charging the polyethylene composition into the extruder to a screw rotation speed Ns was 0.075. Using the polyethylene solution, a microporous polyethylene membrane was produced in the same manner as in Example 1 except that the heat-setting temperature was 120°C.

Comparative Example 6

A polyethylene solution was prepared in the same manner as in Comparative Example 5, except that the ratio of the speed Q of charging the polyethylene composition into the extruder to a screw rotation speed Ns was 0.6. However, a uniform blend could not be obtained.

The properties of the microporous polyethylene membranes obtained in Examples 1 to 4 and Comparative Examples 1 to 6 were measured by the following methods. The results are shown in Table 1.

(1) Average thickness (µm)

The thickness of the microporous polyethylene membrane was measured at a 5-mm interval over a width of 30 cm by a contact thickness meter, and the measured thickness was averaged.

(2) Air permeability (set/100 cm³/20 µm)

The air permeability P₁ of the microporous membrane having a thickness T₁ was measured by an Oken-type air permeability meter (EGO-1 T available from Asahi Seiko Co., Ltd.), and converted to air permeability P₂ at a thickness of 20 µm by the formula of P₂ = (P₁ x 20)/T₁.

(3) Porosity (%)

It was measured by a mass method.

(4) Pin puncture strength (mN/20 µm)

The maximum load was measured when a microporous membrane having a thickness T₁ was pricked with a needle of 1 mm in diameter with a spherical end surface (radius R of curvature: 0.5 mm) at a speed of 2 mm/second. The measured maximum load Lₐ was converted to the maximum load L_{b} at a thickness of 20 µm by the formula of L_{b} = (Lₐ x 20)/T₁, which was regarded as pin puncture strength.

(5) Tensile rupture strength and elongation

Measurement was conducted on a 10-mm-wide rectangular test piece according to ASTM D882.

(6) Shutdown temperature

The air permeability of a microporous polyethylene membrane was measured by an Oken-type air permeability meter (EGO-1T available from Asahi Seiko Co., Ltd.) while heating at a temperature-elevating speed of 5°C/minute, to find a temperature at which the air permeability reached the detection limit of 1 x 10⁵ sec/100 cm³, which was regarded as a shutdown temperature (T_{SD}).

(7) Shutdown start temperature (T_{S})

The data of the air permeability p at a temperature T, which was obtained in the above shutdown temperature measurement, were used to prepare a curve representing the relation of a reciprocal of the air permeability p to a temperature (shown in Fig. 4), and a shutdown start temperature (T_{S}) was determined from the curve at an intersection of an extension L₃ of a straight portion of the curve after the start of temperature elevation from room temperature and before the start of shutdown, and an extension L₄ of a straight portion of the curve after the start of shutdown and before reaching the shutdown temperature (T_{SD}).

(8) Shutdown speed (air permeability change ratio)

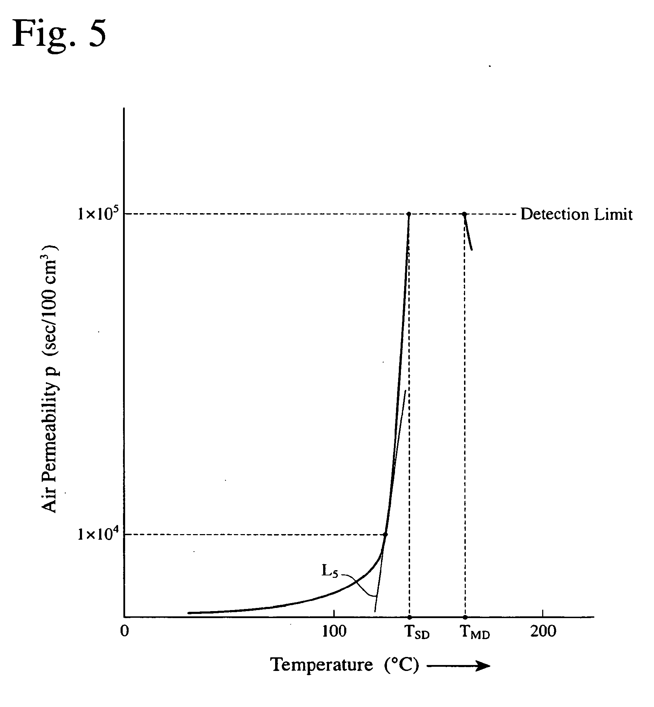

The data of the air permeability p at a temperature T, which was obtained in the above shutdown temperature measurement, were used to prepare an air permeability-temperature curve (shown in Fig. 5), and the shutdown speed was determined as a gradient of the curve (inclination Δp/ΔT of tangent L₅ in Fig. 5) at a temperature at which the air permeability reached 1 x 10⁴ sec/100 cm³.

(9) Shrinkage ratio at 130°C

Using a thermomechanical analyzer (TMA/SS6000 available from Seiko Instruments, Inc.), a test piece of 10 mm (TD) and 3 mm (MD) was heated from room temperature at a speed of 5°C/minute while drawing in a longitudinal direction under a load of 2 g, and a dimensional change ratio to the size at 23°C was measured at 130°C three times, and averaged to determine the shrinkage ratio.

(10) Meltdown temperature

After reaching the above shutdown temperature, heating was continued at a temperature-elevating speed of 5°C/minute, to find a temperature at which the air permeability became 1 x 10⁵ sec/100 cm³ again, which was regarded as a meltdown temperature (T_{MD}) (see Fig. 5).

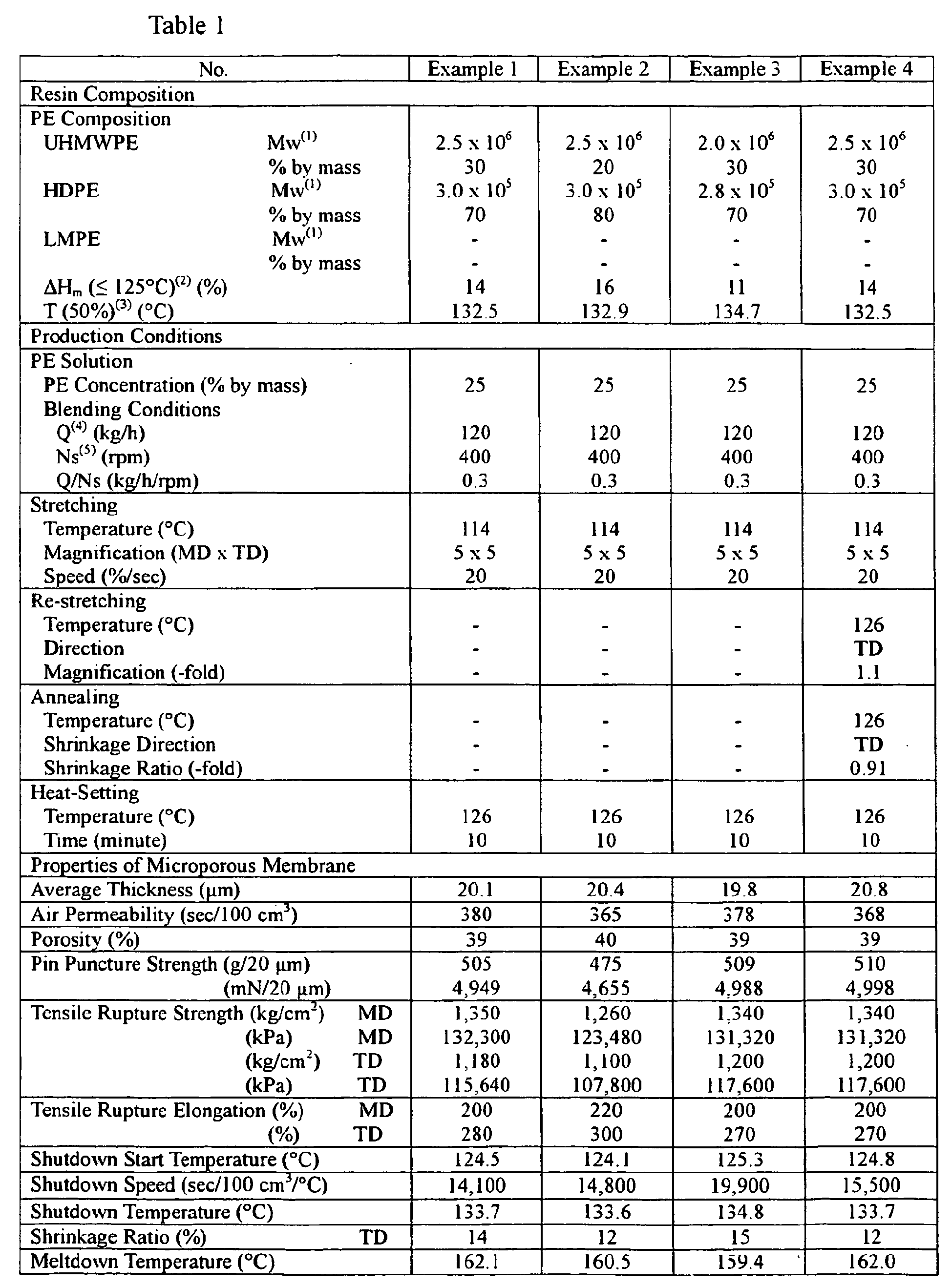

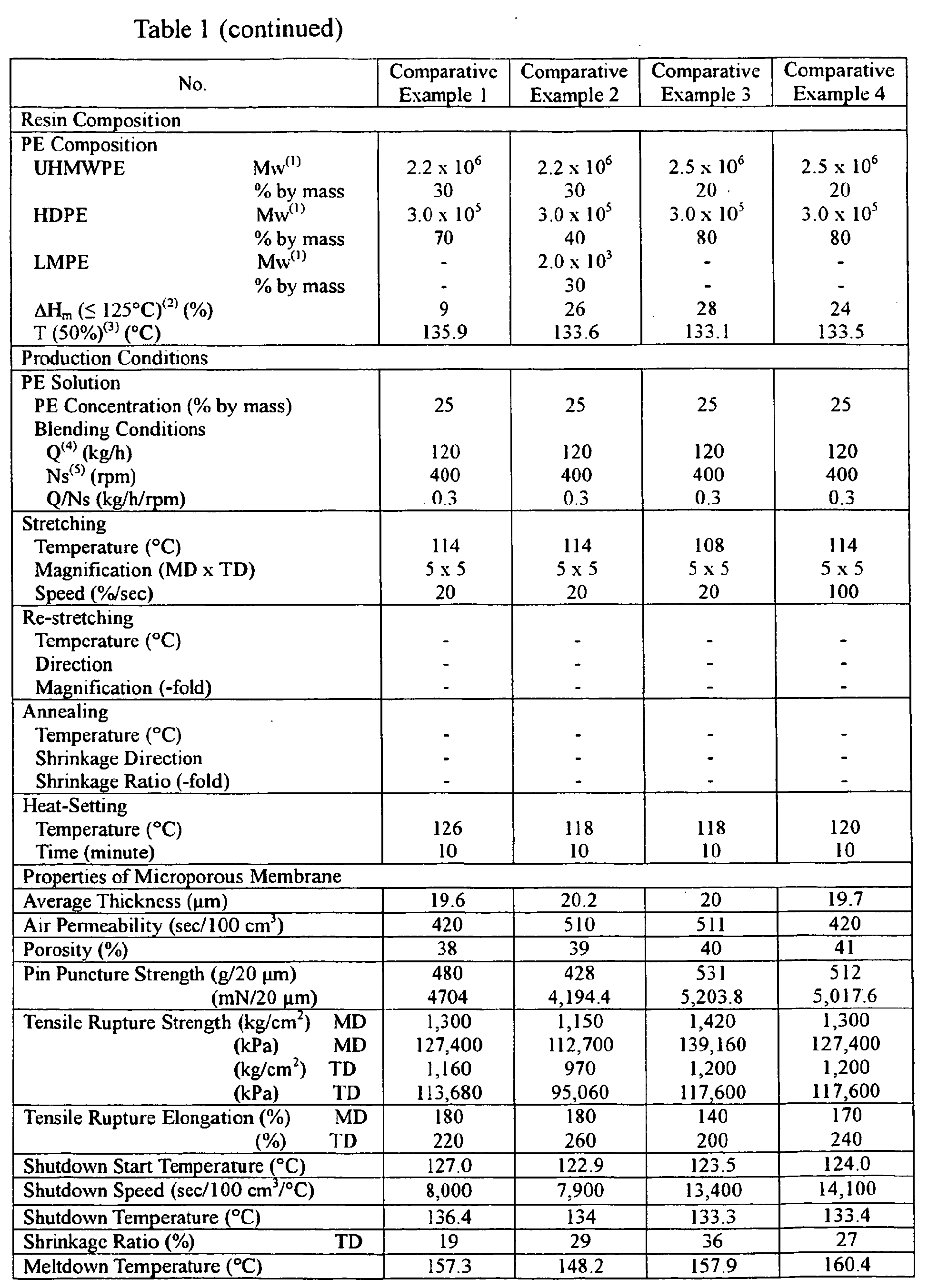

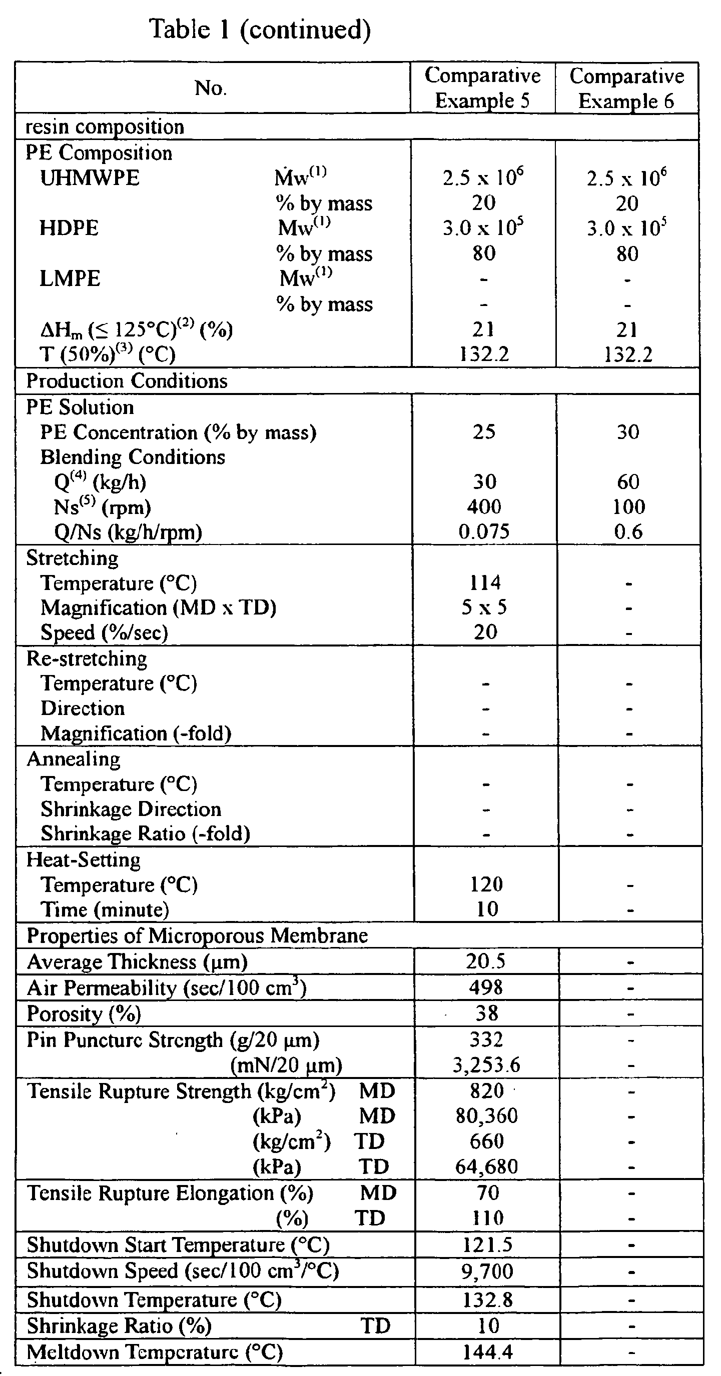

Note: (1) Mw represents a mass-average molecular weight.

(2) A ratio of the calorie absorbed up to 125°C to the crystal-melting calorie ΔHₘ measured by DSC at a temperature-elevating speed of 10°C/minute.

(3) A temperature at which the absorbed calorie reached 50% of the crystal-melting calorie ΔHₘ measured by DSC at a temperature-elevating speed of 10°C/minute.

(4) Q represents the charging speed of the polyethylene composition into the double-screw extruder.

(5) Ns represents a screw rotation speed.

It is clear from Table 1 that the microporous polyethylene membranes of Examples 1 to 4 had shutdown start temperatures of 130°C or lower, shutdown speeds of 10,000 sec/100 cm³/°C or more, shrinkage ratios of 20% or less at 130°C, shutdown temperatures of 135°C or lower, and meltdown temperatures of 150°C or higher, indicating that they had excellent heat shrinkage resistance, shutdown properties and meltdown properties. They also had excellent permeability and mechanical strength.

Because of T (50%) higher than 135°C, the membrane of Comparative Example 1 had higher shutdown start temperature and shutdown temperature than those of Examples 1 to 4, and a low shutdown speed of less than 8,000 sec/100 cm³/°C. Because the membranes of Comparative Examples 2 to 4 were produced with ΔHm (≤ 125°C) of more than 20%, particularly the membrane of Comparative Example 4 being produced at a stretching speed of more than 80%/second, they were poorer in heat shrinkage resistance than those of Examples 1 to 4. In Comparative Example 5, the ratio of the speed Q of charging the polyethylene composition into the extruder to a screw rotation speed Ns was less than 0.1 kg/h/rpm, the polyethylene composition was excessively sheared. Accordingly, the membrane of Comparative Example 5 had a lower meltdown temperature than those of Examples 1 to 4.

### EFFECT OF THE INVENTION

This invention provides a microporous polyolefin membrane having high stability of properties before the start of shutdown, and a high air permeability change ratio, as a measure of the shutdown speed after the start of shutdown, as well as excellent heat shrinkage resistance in a temperature range from a shutdown start temperature to a shutdown temperature and a low shutdown temperature, and excellent permeability and mechanical properties. The use of the microporous polyolefin membrane of this invention as a separator provides batteries with excellent stability and productivity.

## Claims

1. A microporous polyolefin membrane comprising a polyethylene resin, and having (a) a shutdown temperature of 135°C or lower, at which the air permeability measured while heating at a temperature-elevating speed of 5°C/minute reaches 1 x 105 sec/100 cm³, (b) an air permeability change ratio of 1 x 10⁴ sec/100 cm³/°C or more, which is a gradient of an air permeability-temperature curve at the air permeability of 1 x 10⁴ sec/100 cm³ , and (c) a shrinkage ratio of 20% or less at 130°C in a transverse direction, which is measured by thermomechanical analysis under a load of 2 gf and at a temperature-elevating speed of 5°C/minute, wherein the polyethylene resin has ΔHm (≤ 125°C) of 20% or less, which is a ratio of the calorie absorbed up to 125°C to the crystal-melting calorie measured by differential scanning calorimetry at a constant temperature-elevating speed in a range of 3 to 20°C/minute, and a temperature of 135°C or lower, at which the absorbed calorie reaches 50% of the crystal-melting calorie.

2. A microporous polyolefin membrane according to claim 1, wherein the polyethylene resin contains a copolymer of ethylene and another α-olefin.

3. A microporous polyolefin membrane according to claim 2, wherein the copolymer is produced by use of single-site catalysts and has a mass-average molecular weight of 1 x 10⁴ or more and less than 7 x 10⁵.

4. A method for producing the microporous polyolefin membrane recited in any of claims 1 to 3, comprising the steps of (1) melt-blending a polyolefin resin comprising a polyethylene resin and a membrane-forming solvent in a double-screw extruder at a ratio Q/Ns of 0.1 to 0.55 kg/h/rpm, wherein Q is a charging speed (kg/h) of the polyolefin resin, and Ns is a screw rotation speed (rpm), to prepare a polyolefin resin solution, the polyethylene resin having Hm (≤ 125°C) of 20% or less, which is a ratio of the calorie absorbed up to 125°C to the crystal-melting calorie measured by differential scanning calorimetry at a constant temperature-elevating speed in a range of 3 to 20°C/minute, and a temperature of 135°C or lower, at which the absorbed calorie reaches 50% of the crystal-melting calorie; (2) extruding the polyolefin resin solution through a die, and cooling it to form a gel-like sheet; (3) stretching the gel-like sheet; and then (4) removing the membrane-forming solvent.

5. The method for producing a microporous polyolefin membrane according to claim 4, wherein the gel-like sheet is stretched at a speed of 1 to 80%/second per 100% of the length before stretching.

6. A battery separator formed by the microporous polyolefin membrane recited in any of claims 1 to 3.

7. A battery comprising a separator formed by the microporous polyolefin membrane recited in any of claims 1 to 3.

## Patentansprüche

1. Mikroporöse Polyolefinmembran mit einem Polyethylenharz und mit (a) einer Abschalttemperatur von 135°C oder niedriger, bei der die während des Erhitzens mit einer Temperaturerhöhungsgeschwindigkeit von 5°C/min gemessene Luftdurchlässigkeit 1 x 10⁵ sec/100 cm³ erreicht, (b) einem Luftdurchlässigkeits-Veränderungsverhältnis von 1 x 10⁴ sec/100 cm³/°C oder mehr, das ein Gradient einer Luftdurchlässigkeit-Temperatur-Kurve bei der Luftdurchlässigkeit von 1 x 10⁴ sec/100 cm³ ist, und (c) einem Schrumpfverhältnis von 20% oder weniger bei 130°C in einer Querrichtung, das mittels thermomechanischer Analyse unter Last von 2 gf und bei einer Temperaturerhöhungsgeschwindigkeit von 5°C/min gemessen wird, wobei der Polyethylenharz ΔHm (≤ 125°C) von 20% oder weniger, was ein Verhältnis der bis 125°C absorbierten Wärmemenge zur Kristallschmelz-Wärmemenge ist, die mittels differentieller Scan-Kalorimetrie bei einer konstanten Temperaturerhöhungsgeschwindigkeit in einem Bereich von 3 bis 20°C/min gemessen wird, und eine Temperatur von 135°C oder niedriger, bei der die absorbierte Wärmemenge 50% der Kristallschmelz-Wärmemenge erreicht, aufweist.

2. Mikroporöse Polyolefinmembran nach Anspruch 1, wobei das Polyethylenharz ein Copolymer aus Ethylen und einem anderen α -Olefin enthält.

3. Mikroporöse Polyolefinmembran nach Anspruch 2, wobei das Copolymer mittels Einzelplatz-Katalysatoren hergestellt ist und ein massendurchschnittliches Molekulargewicht von 1 x 10⁴ oder mehr und weniger als 7 x 10⁵ aufweist.

4. Verfahren zum Herstellen der mikroporösen Polyolefinmembran nach einem der Ansprüche 1 bis 3, umfassend Schritte, in denen (1) ein Polyolefinharz mit einem Polyethylenharz und einem membranbildenden Lösungsmittel in einer Doppelschrauben-Extrudiermaschine bei einem Verhältnis Q/Ns von 0,1 bis 0,55 kg/H/rpm schmelz-gemischt werden, wobei Q eine Befüllungsgeschwindigkeit (kg/h) des Polyolefinharz ist und Ns eine Schraubenrotationsgeschwindigkeit (rpm) ist, um eine Polyolefinharzlösung zuzubereiten, wobei das Polyethylenharz Hm (≤ 125°C) von 20% oder weniger, was ein Verhältnis der bis 125°C absorbierten Wärmemenge zur Kristallschmelz-Wärmemenge ist, die mittels differentieller Scan-Kalorimetrie bei einer konstanten Temperaturerhöhungsgeschwindigkeit in einem Bereich von 3 bis 20°C/min gemessen wird, und eine Temperatur von 135°C oder niedriger, bei der die absorbierte Wärmemenge 50% der Kristallschmelz-Wärmemenge erreicht, aufweist; (2) die Polyolefinharzlösung durch eine Düse extrudiert wird und gekühlt wird, um eine gelartige Lage zu bilden; (3) die gelartige Lage gedehnt wird; und dann (4) das membranbildende Lösungsmittel entfernt wird.

5. Verfahren zum Herstellen einer mikroporösen Polyolefinmembran nach Anspruch 4, wobei die gelartige Lage bei einer Geschwindigkeit von 1 bis 80%/sec pro 100% der Länge vor dem Dehnen gedehnt wird.

6. Batterieseparator, gebildet durch die mikroporöse Polyolefinmembran nach einem der Ansprüche 1 bis 3.

7. Batterie, umfassend einen Separator, der durch die mikroporöse Polyolefinmembran nach einem der Ansprüche 1 bis 3 gebildet ist.

## Revendications

1. Membrane microporeuse polyoléfinique comprenant une résine de polyéthylène, et présentant (a) une température d'arrêt inférieure ou égale à 135 °C, à laquelle la perméabilité de l'air mesurée lors du chauffage à une vitesse d'élévation de la température de 5 °C/minute atteint 1 x 10⁵ s/100 cm³, (b) un rapport de changement de la perméabilité de l'air supérieur ou égal à 1 x 10⁴ s/100 cm³/°C, qui représente le gradient d'une courbe perméabilité de l'air-température à la perméabilité de l'air de 1 x 10⁴ s/100 cm³, et (c) un indice de retrait inférieur ou égal à 20 % à 130 °C dans une direction transversale, qui est mesuré par analyse thermomécanique sous une charge de 2 gf et à une vitesse d'élévation de la température de 5 °C/minute, dans laquelle la résine de polyéthylène a une valeur ΔHm (≤ 125 °C) inférieure ou égale à 20 %, qui représente le rapport de l'énergie calorifique absorbée jusqu'à 125 °C à l'énergie calorifique de fusion cristalline mesuré par calorimétrie à balayage différentiel à une vitesse d'élévation de la température constante dans la plage de 3 à 20 °C/minute, et une température inférieure ou égale à 135 °C, à laquelle l'énergie calorifique absorbée atteint 50 % de l'énergie calorifique de fusion cristalline.

2. Membrane microporeuse polyoléfinique selon la revendication 1, dans laquelle la résine de polyéthylène contient un copolymère d'éthylène et d'une autre α-oléfine.

3. Membrane microporeuse polyoléfinique selon la revendication 2, dans laquelle le copolymère est produit en utilisant des catalyseurs à site unique et a un poids moléculaire moyen en masse supérieur ou égal à 1 x 10⁴ et inférieur à 7 x 10⁵.

4. Procédé de production de la membrane microporeuse polyoléfinique selon l'une quelconque des revendications 1 à 3, comprenant les étapes consistant à (1) mélanger à l'état fondu une résine polyoléfinique comprenant une résine de polyéthylène et un solvant formant une membrane dans une extrudeuse à double vis à un rapport Q/Ns de 0,1 à 0,55 kg/h/tr/min, dans lequel Q représente la vitesse de chargement (kg/h) de la résine polyoléfinique, et Ns représente la vitesse de rotation de la vis (tr/min), pour préparer une solution de résine polyoléfinique, la résine de polyéthylène présentant une valeur Hm (≤ 125 °C) inférieure ou égale à 20 %, qui représente le rapport de l'énergie calorifique absorbée jusqu'à 125 °C à l'énergie calorifique de fusion cristalline mesuré par calorimétrie à balayage différentiel à une vitesse d'élévation de la température constante dans la plage de 3 à 20 °C/minute, et une température inférieure ou égale à 135 °C, à laquelle l'énergie calorifique absorbée atteint 50 % de l'énergie calorifique de fusion cristalline ; (2) extruder la solution de résine polyoléfinique à travers une filière, et la refroidir pour former une feuille de type gel ; (3) étirer la feuille de type gel ; puis (4) éliminer le solvant formant une membrane.

5. Procédé de production d'une membrane microporeuse polyoléfinique selon la revendication 4, dans lequel la feuille de type gel est étirée à une vitesse de 1 à 80 %/seconde pour une longueur avant étirage de 100 %.

6. Séparateur de batterie fabriqué à partir de la membrane microporeuse polyoléfinique selon l'une quelconque des revendications 1 à 3.

7. Batterie comprenant un séparateur fabriqué à partir de la membrane microporeuse polyoléfinique selon l'une quelconque des revendications 1 à 3.
